# EUROPEAN PATENT SPECIFICATION

(11) **EP 4 050 847 B1**
(45) Date of publication and mention of the grant of the patent: **13.08.2025**
(21) Application number: 20892095.9
(22) Date of filing: 27.11.2020
(51) Int. Cl.: H04L 12/14, H04M 15/00, H04W 4/24

(54) **SHARING METHOD, APPARATUS, COMPUTER PROGRAM PRODUCT AND COMPUTER STORAGE MEDIUM FOR MULTI-ACCOUNT CLOUD SERVICE USAGE PACKAGE**
VERFAHREN, VORRICHTUNG, COMPUTERPROGRAMMPRODUKT UND COMPUTERSPEICHERMEDIUM ZUR GEMEINSAMEN NUTZUNG EINES CLOUD-DIENSTNUTZUNGSPACKAGES MIT MEHREREN KONTEN
PROCÉDÉ DE PARTAGE, APPAREIL, PRODUIT DE PROGRAMME INFORMATIQUE ET SUPPORT DE STOCKAGE INFORMATIQUE POUR UN PAQUET D'UTILISATION D'UN SERVICE SUR LE NUAGE À COMPTES MULTIPLES

(30) Priority: 27.11.2019 CN 201911184915
(43) Date of publication of application: 31.08.2022
(73) Proprietor: Huawei Cloud Computing Technologies Co., Ltd., Guizhou 550025 (CN)
(72) Inventor: ZHAO, Shaohua, Shenzhen, Guangdong 518129 (CN); CHEN, Lifeng, Shenzhen, Guangdong 518129 (CN); HUANG, Jun, Shenzhen, Guangdong 518129 (CN)
(74) Representative: MERH-IP Matias Erny Reichl Hoffmann Patentanwälte PartG mbB
(86) International application number: PCT/CN2020/132225
(87) International publication number: WO 2021/104451

(56) References cited:
- WO-A1-2016/072895
- CN-A- 101 771 546
- CN-A- 108 897 606
- CN-A- 109 743 700
- CN-A- 109 981 301
- CN-A- 111 162 921
- US-A1- 2015 131 488

## Description

### TECHNICAL FIELD

This application relates to the field of cloud services, and in particular, to a multi-account cloud service usage package sharing method, apparatus, computer program product and computer storage medium.

### BACKGROUND

A cloud service (Cloud Service) usually means that a cloud service provider provides a shared resource service for users. With the development of Internet technologies, the cloud service has been rapidly developed and applied. Currently, a cloud service platform may provide a plurality of cloud services such as infrastructure as a service (Infrastructure as a Service, IaaS) for the users. The user may purchase a usage package of a cloud service resource by using a cloud service portal website. When the user needs to use this cloud service resource, a resource management system of cloud computing allocates a corresponding cloud service resource in a resource pool to the user to use. A charging system deducts the usage package based on usage of the cloud service resource that is used by the user.

Generally, for ease of management, an organization or enterprise purchases a plurality of independent accounts and usage packages of various cloud services. In this way, each department can manage and use various cloud service resources separately. Although each department can use the plurality of independent accounts, each time a charging system performs deduction based on a use record, the charging system first deducts a usage package of an account corresponding to the use record, and then deducts a usage package of another account. As a result, each time the user uses a cloud service resource, the user needs to check a balance of each account one by one, plan usage of the user in advance, and then switch the account to use the cloud service resource. Sometimes, if the user is careless to forget switching the account, there may be a case in which the user has purchased usage packages with enough quotas, but a usage excess occurs due to an improper deduction sequence, causing economic losses to the user and poor user experience.
CN 109 743 700 A discloses a billing method for a shared service, comprising: obtaining service usage information in a shared service package for a terminal corresponding to each sub-account under an account group; and billing each sub-account according to a predetermined billing strategy.
CN 101 771 546 A discloses a data service billing method, comprising: confirming the priority and conversion rate of various accounts of the user; prioritizing the accounts with high priority and sufficient balance for billing at the conversion rate of the accounts based on the deduction amount in the data service billing statement.
CN 109 981 301 A discloses a cloud service billing method, comprising: obtaining information about a tenant to be billed for a cloud service; obtaining a plurality of event messages corresponding to said tenant information from a preestablished message queue; generating, for each event message, an analysis event for the cloud service product used by the tenant at a corresponding usage state change point in time; and creating a billing list corresponding to said tenant information based on all the generated analysis events.

### SUMMARY

This application provides a multi-account cloud service usage package sharing method and apparatus, to resolve a problem that when a user having a plurality of accounts uses a cloud service resource, the user needs to check a balance of each account one by one and switch the account to use the resource to avoid a usage excess caused by an improper deduction sequence, which brings poor user experience. This problem is solved by the solution provided in accordance with the appended claims.

### BRIEF DESCRIPTION OF DRAWINGS

To describe the technical solutions in the embodiments of this application or in the conventional technology more clearly, the following briefly describes the accompanying drawings for describing the embodiments or the conventional technology.
FIG. 1 is a schematic diagram of an architecture of a cloud service management platform;
FIG. 2 is a schematic diagram of a procedure of generating a bill by a charging system based on a user use record and a historical usage package;
FIG. 3 is a schematic flowchart of a multi-account cloud service usage package sharing method according to this application;
FIG. 4 is a schematic diagram of a procedure of obtaining a sharing execution plan according to this application;
FIG. 5 is a schematic flowchart of steps of a multi-account cloud service usage package sharing method in an application scenario according to this application;
FIG. 6 is a schematic diagram of a structure of a multi-account cloud service usage package sharing apparatus according to this application; and
FIG. 7 is a schematic diagram of a structure of an electronic device according to this application.

### DESCRIPTION OF EMBODIMENTS

Terms used in implementations of this application are merely used to explain specific embodiments of this application, but are not intended to limit this application.

For ease of understanding of the embodiments of this application, an application scenario related to this application is first briefly described.

A cloud service is a product obtained through development and convergence of conventional computer and network technologies such as distributed computing (distributed computing), parallel computing (parallel computing), utility computing (utility computing), network storage (network storage technologies), virtualization (virtualization), load balance (Load Balance), and a content delivery network (Content Delivery Network). The cloud service is adding, usage, and interaction models of Internet-based services. It is often used to provide dynamically scalable, and usually virtualized, resources over the Internet. Understandably, cloud is a metaphor for the network or the Internet. In the past, in a figure, the cloud was usually used to represent telecommunications networks, and later, it was also used to abstractly represent the Internet and underlying infrastructure. Actually, the cloud service is ondemand and scalable access to a service over the network. This service may be IT related to software or the Internet, or may be another service, meaning that a computing capability may also be circulated over the Internet as a commodity.

In short, a plurality of customers may share a system resource of a cloud service provider, and can enjoy professional IT services without having to set up any device and staff management personnel. This can greatly reduce operating costs for ordinary entrepreneurs and small- and medium-sized enterprises. For the cloud service provider, the purchased system resource in an idle mode can be leased to the customers, thereby improving utilization of the resource of the cloud service provider.

In addition, an architecture of a cloud service management platform in this application is briefly described.

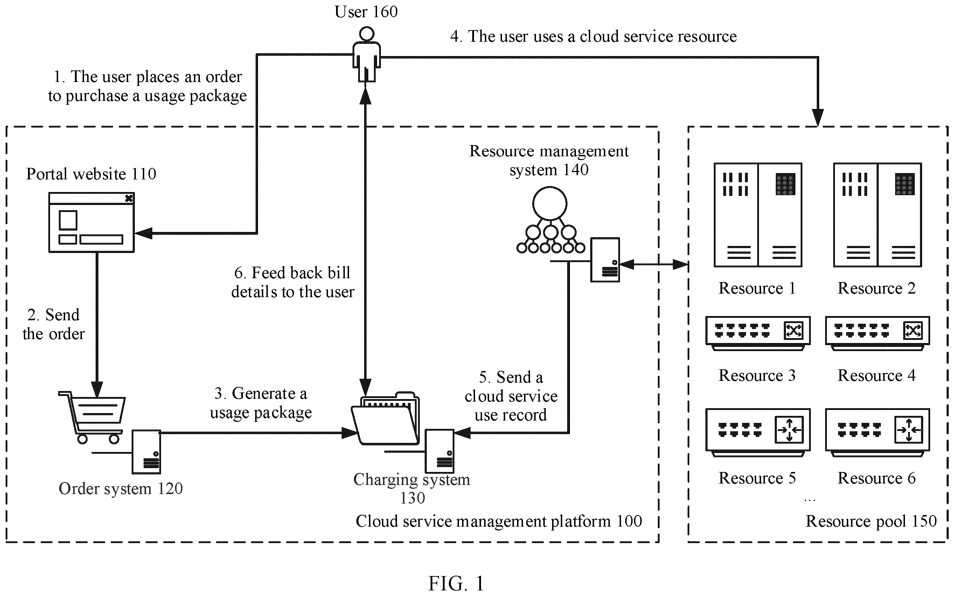

FIG. 1 is a schematic diagram of an architecture of a cloud service management platform according to this application. As shown in FIG. 1, the cloud service management platform 100 may include a portal website 110, an order system 120, a charging system 130, and a resource management system 140. The resource management system 140 is connected to a resource pool 150, and a user 160 may purchase and use a cloud service resource in the resource pool 150 by using the portal website 110. It should be understood that only one user and six cloud service resources are used as an example for description in FIG. 1. In an actual situation, a quantity of users and a quantity of cloud service resources are not specifically limited in this application. In addition, FIG. 1 is merely a possible implementation of the cloud service management platform. During actual application, the cloud service management platform 100 may further include more or fewer units, modules, or subsystems. This is not limited in this application.

The portal website 110 may be a portal website of a cloud service platform. The portal website 110 may present, to the user, a type, a parameter, and a price of a resource that can be purchased in a current cloud service resource pool. For example, the portal website 110 may present, to the user 160, that an available resource 1 exists in the current resource pool 150. The resource 1 is a two-core 8G cloud server that is located in a South China data center, an operating system is Windows, a bandwidth is 1M, and a rent is 300 CNY for three months. It may be understood that the portal website 110 may further be used by the user to query a current account balance, a bill, a use record, and the like. After the user chooses to purchase a cloud service resource, the portal website 110 of the cloud service generates order information, where the order information may include user information, and a type, a parameter, and a price of the resource purchased by the user; and the order information is sent to the order system 120. It should be understood that the foregoing example is merely used for description, and does not constitute a specific limitation.

The order system 120 may support the portal website 110 to complete a user purchase process, for example, provide a payment interface of a cloud platform provider for the portal website 110, so that the portal website 110 displays a payment page to the user 160. Furthermore, the order system 120 may drive the charging system 130 to generate a corresponding usage package after the user successfully pays. Other order management functions such as collecting statistics on and classifying orders that are successfully paid by the user and orders that are not successfully paid by the user may further be included. This is not specifically limited in this application.

Driven by the order system 120, the charging system 130 may generate a usage package purchased by the user 160 this time, and update a usage balance of the user. When receiving a use record of the user 160 pushed by the resource management system 140, the charging system 130 deducts the usage balance based on the use record, and generates a bill.

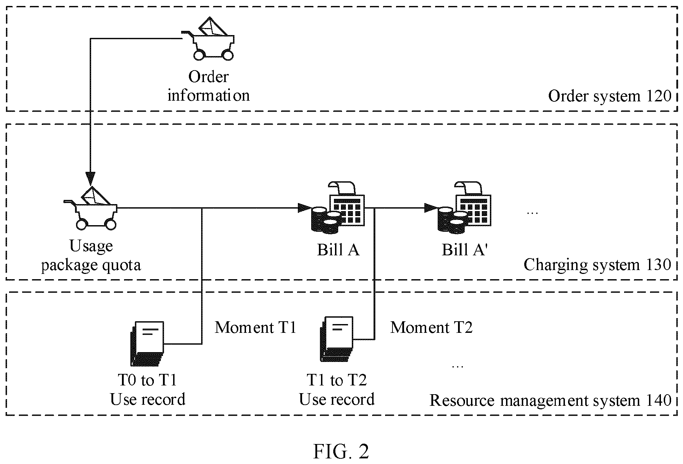

In specific implementation, as shown in FIG. 2, the charging system 130 may first generate, based on order information generated by the order system 120, a quota of the usage package purchased by the user this time, and then update the usage balance of a current cloud service usage package of the user. When the charging system 130 receives the use record (namely, a use record of a cloud service resource corresponding to the user) pushed by the resource management system 140, the charging system 130 may deduct the usage balance based on the use record, to generate a bill A. It should be understood that the bill A may be updated immediately after the resource management system 140 pushes a use record each time. Therefore, if the resource management system 140 sends a use record at a time interval T, the bill A is also updated at the time interval T. As shown in FIG. 2, the resource management system 140 pushes a use record from a moment T0 to a moment T1 to the charging system 130 at the moment T1. Therefore, the charging system 130 generates a bill A1 based on a usage balance and the use record, and updates the usage balance. Similarly, the resource management system 140 pushes a use record from the moment T1 to a moment T2 to the charging system 130 at the moment T2. Therefore, the charging system 130 updates the bill A1 based on a current usage balance and the use record, generates a bill A2, and updates the usage balance again, and so on. Details are not described herein again. It may be understood that, when the user initiates a bill query request by using the portal website 110, the charging system 130 may further integrate a newly generated bill to generate historical bill details, and push the historical bill details to the portal website 110 for query and check by the user 160.

The resource management system 140 may perform overall monitoring and management on various cloud service resources in the resource pool 150, generate use records of various cloud service resources based on use statuses of the user, and send the use records to the charging system 130 for processing. In specific implementation, the resource management system 140 may periodically send cloud service use records to the charging system 130. For example, the resource management system 140 sends a cloud service use record every 1 hour. A specific value of a period T may be modified based on a service use status. This is not specifically limited in this application. The resource management system 140 may further provide a feedback for the portal website 110 based on an overall status of various cloud service resources in the resource pool 150, for example, feed back a currently idle cloud computing resource.

The resource pool 150 is configured to provide the user with various IaaS cloud services, such as a cloud host, cloud storage, and a bandwidth, may further provide the user with a platform as a service (Platform as a Service, PaaS) such as a relational database service (Relational Database Service, RDS), software as a service (Software as a Service, SaaS), or the like, and may further provide rich cloud services that can be used by using a network, such as a software development cloud. This is not limited in this application.

Generally, charging types of cloud services may include unit price charging and usage package charging. The unit price charging means that a fee is calculated based on a unit price of network traffic or usage. For example, the price of 1G traffic is 1 CNY, and a user needs to spend 60 CNY to purchase 60G traffic. The usage package charging means that a user purchases a specific quota of cloud service usage package at a time; after the user uses the cloud service usage package, the usage package is deducted based on a use record; and excess usage after the quota of the usage package is completely deducted is charged at the unit price. For example, the user spends 30 CNY to purchase 40G traffic. If the user uses 20G traffic, no extra fee is generated. If the user uses 40G traffic, no extra fee is generated, and the user spends 30 CNY to use 40G traffic. If the user uses 60G traffic, 40G traffic is non-excess usage and is not extra charged, but 20G traffic is excess usage and is charged at the unit price, and therefore, the user needs to spend 30 + 20 = 50 CNY to use 60G traffic. It should be understood that the foregoing example is merely used for description, and does not constitute a specific limitation.

It may be understood that cost performance of a usage package of a cloud service is far higher than cost performance of separately charging based on usage. Therefore, a user usually places an order to purchase a usage package of a cloud computing resource on the portal website 110 in advance based on a service requirement of the user. Generally, for ease of management, an organization or enterprise purchases a plurality of independent accounts and usage packages of various cloud services. In this way, each department can manage and use various cloud service resources separately. Although each department can share the plurality of independent accounts, when the charging system 130 performs usage package deduction based on a use record in a procedure shown in FIG. 2, the charging system 130 first deducts a usage package of an account corresponding to the use record, and then deducts a usage package of another account. As a result, each time the user uses a cloud service resource, the user needs to check a balance of each account one by one, plan usage of the user in advance, and then switch the account to use the cloud service resource, to obtain a least-cost usage package deduction solution. Sometimes, if the user is careless to forget switching the account, there may be a case in which the user has purchased usage packages with enough quotas, but a usage excess occurs due to an improper usage package deduction solution, causing poor user experience.

For example, as shown in Table 1, it is assumed that a user A has an account A1 and an account A2. The user purchases an ultra-high I/O or high I/O 100G hard disk usage package X1 (the user can use a 100G ultra-high I/O disk capacity or 100G high I/O disk capacity) by using the account A1, and purchases an ultra-high I/O 100G hard disk usage package X2 by using the account A2. It is assumed that a use record received by the charging system 130 shows that the account A1 first uses 50G ultra-high I/O hard disk usage at a moment T0, and then uses 60G ultra-high I/O hard disk usage at a moment T1, and the account A2 uses 50G high I/O hard disk usage at a moment T3. In this case, in a bill finally generated by the charging system 130, at the moment T1, the 50G usage is deducted from the usage package X1 of the account A1, and a balance of the usage package X1 (the high I/O or ultra-high I/O hard disk usage package) is 50G usage. At a moment T2, the 50G usage is deducted from the usage package X1 of the account A1. Because the balance of the usage package X1 is zero, the remaining 10G usage is deducted from the usage package X2 of the account A2, and a balance of the usage package X2 (ultra-high I/O hard disk usage package) is 90G usage. At the moment T3, although there is a use record of the account A2, because the account A2 does not have a high I/O hard disk usage package, the usage is deducted from the usage package X1 of the account A1. As a result, the balance of the usage package X2 is 90G usage, and there is a 50G excess for the usage package X1. In this case, the user needs to independently pay for the 50G ultra-high I/O hard disk usage.

However, if the user first switches to the account A2 to use the 50G ultra-high I/O hard disk usage at the moment T0, the 50G usage is deducted from the usage package X2; then, the user uses the account A2 to use the 60G ultra-high I/O hard disk usage at the moment T1, so that the 50G usage is deducted from the usage package X2, and the 10G usage is deducted from the usage package X1; and at the moment T3, the user switches to the account A1 to use the 50G high I/O hard disk usage, so that the 50G usage is deducted from the usage package X1. In this way, no excess usage is generated finally, and the account A1 still has 50G usage package X1. However, for the user, the user cannot accurately predict usage of the user. Therefore, because the user does not switch the account to use the cloud service resource, there is usually a problem shown in Table 1 in which an enough usage package is purchased, but excess usage is generated due to an improper deduction solution, causing economic losses to the user and reducing user experience. It should be understood that the foregoing example is merely used for description, and does not constitute a specific limitation.

**Table 1 Example of a bill in an application scenario**

| Time | Use account | Use record | | Usage deduction | | After deduction | | Excess usage |
|---|---|---|---|---|---|---|---|---|
| | | Ultra-high I/O | High I/O | X1 | X2 | X1 | X2 | |
| T0 | A1 | 50G | 0G | -50G | 0G | 50G | 100G | 0G |
| T1 | A1 | 60G | 0G | -50G | -10G | 0G | 90G | 0G |
| T2 | A2 | 0G | 50G | -50G | 0G | -50G | 90G | 50G |

To resolve the foregoing problem that when the user having the plurality of accounts or a plurality of shared accounts use the cloud service resource, the balance of each account needs to be checked one by one, and the account is switched to use the cloud service resource to obtain a most proper usage package deduction solution, causing poor user experience, this application provides a multi-account cloud service usage package sharing method. Specifically, deduction policies that are of a plurality of accounts and that are set by a user are obtained to generate a sharing execution plan of the plurality of accounts; and after a plurality of use records of the user are received, the charging system 130 may generate a to-be-deducted queue according to the sharing execution plan, and performs deduction for the plurality of accounts according to the to-be-deducted queue. In this way, when the user having the plurality of accounts uses the cloud service resource, the user does not need to perform any account switching operation or balance checking operation, and usage packages of the plurality of accounts can be deducted according to a least-cost deduction solution. This reduces economic losses to the user and improves user experience.

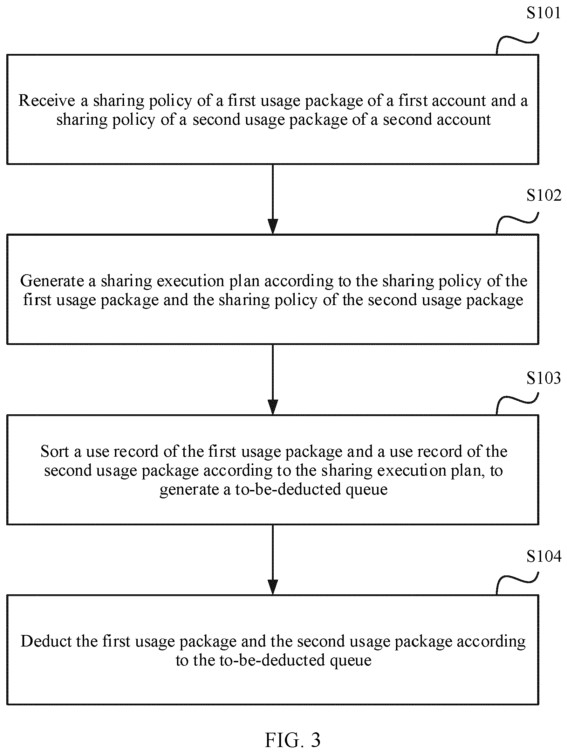

FIG. 3 is a schematic flowchart of a multi-account cloud service usage package sharing method according to this application. As shown in FIG. 3, the method includes the following steps:
S101: Receive a sharing policy of a first usage package of a first account and a sharing policy of a second usage package of a second account.

The first account and the second account are shared accounts. The first account and the second account may be subaccounts used by a same user, or may be independent accounts that are used by different users and whose resources are isolated from each other. In specific implementation, sharing policies of usage packages of more than two accounts may be received in step S101. A quantity of shared accounts is not limited in this application.

S102: Generate a sharing execution plan according to the sharing policy of the first usage package and the sharing policy of the second usage package.

S103: Sort a use record of the first usage package and a use record of the second usage package according to the sharing execution plan, to generate a to-be-deducted queue.

S104: Deduct the first usage package and the second usage package according to the to-be-deducted queue.

It can be learned from the system architecture shown in FIG. 1 that the multi-account cloud service usage package sharing method provided in this application is for the charging system 130, and may be specifically step 3 in FIG. 1. To be specific, after receiving order information sent by the order system 120, the charging system 130 performs the multi-account cloud service usage package sharing method provided in this application, and may determine the sharing execution plan of the plurality of accounts of the user according to the sharing policies that are set by the user. In other words, after receiving the use records that are of the plurality of accounts of the user and that are sent by the resource management system 140, the to-be-deducted queue may be generated. In this way, the charging system 130 can perform deduction for the plurality of accounts according to the to-be-deducted queue in a least-cost deduction sequence, thereby reducing economic losses to the user caused by usage package excess due to an improper deduction sequence, and improving user experience.

The following separately describes the foregoing sharing execution plan and the to-be-deducted queue in detail.

### 1. Sharing execution plan

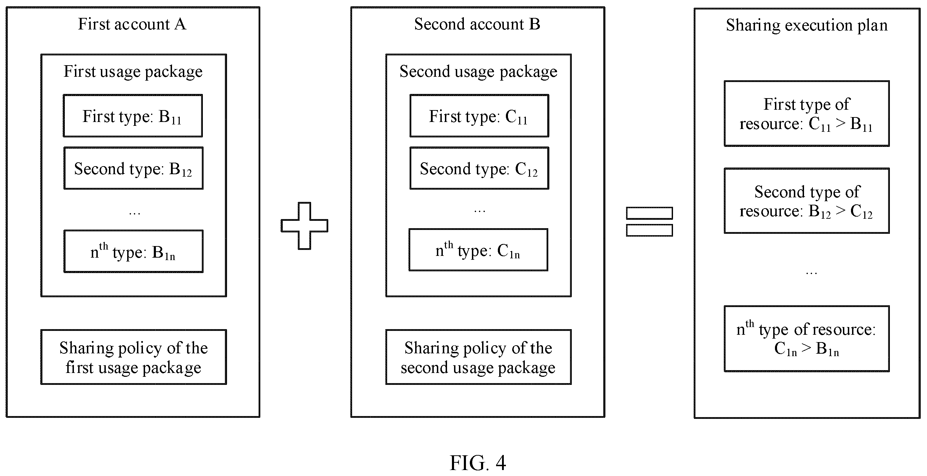

In this embodiment of this application, the sharing execution plan is obtained according to the sharing policy of the first account and the sharing policy of the second account. Specifically, as shown in FIG. 4, both the first usage package and the second usage package include usage subpackages of n cloud service resource types. The sharing execution plan includes n deduction sequences, and each deduction sequence includes a deduction sequence between usage subpackages of a same cloud service resource type. The sharing execution plan may be obtained based on the usage subpackages of the n types in the first usage package, the sharing policy of the first usage package, the usage subpackages of the n types in the second usage package, and the sharing policy of the second usage package.

The n cloud service resource types may be a storage product such as a hard disk service, a hard disk backup service, or the like, a network product such as a content delivery network (Content Delivery Network, CDN) service, a virtual private network (Virtual Private Network, VPN) service, or the like, or a computing product such as an elastic cloud service, a cloud container engine (Cloud Container Engine, CCE) service, or the like, or may be a cloud service of another product type, such as a security type, an application service type, a database type, a video type, an enterprise intelligence (EI) type, or an Internet of Things type. This is not specifically limited in this application.

It should be noted that each usage subpackage may include one or more usage packages, and quotas, duration, and the like of usage packages in a same usage subpackage may be the same, or may be different. For example, it is assumed that a first account A1 purchases a high I/O hard disk usage package X₁ of 100G/hour/three months (a user has a hard disk usage package whose quota is 100G per hour in three months, and if usage exceeds 100G per hour, excess usage is charged at a unit price), an ultra-high I/O hard disk usage package X₂ of 100G/hour/three months, and a high/ultra-high I/O hard disk usage package X₃ of 50G/day/three months. Although the first usage package includes the three usage packages X₁, X₂, and X₃, the first usage package includes only two resource types of cloud service usage packages, where a first resource type of usage package is the high I/O hard disk usage package, including X₁ and X₃, and a second resource type of usage package is the ultra-high I/O hard disk usage package, including X₂ and X₃. It should be understood that the foregoing example is merely used for description, and does not constitute a specific limitation.

In some embodiments, the sharing policy of the first usage package may include first deducting the first usage package, or first deducting one or more usage subpackages in the first usage package. The sharing policy of the second usage package includes first deducting the second usage package, or first deducting one or more usage subpackages in the second usage package. That is, the user may set to first deduct a specified account, or may set to first deduct several specified usage packages of a specified account. For example, if the first usage package of the first account A1 includes the usage packages X₁ and X₂, the sharing policy of the first usage package may be first deducting all usage packages of the account A1, that is, only when balances of the usage packages X₁ and X₂ are 0, another usage package is deducted. The sharing policy of the first usage package may alternatively be first deducting the usage package X₁, that is, only when the balance of the usage package X₁ is 0, another usage package is deducted. The sharing policy of the first usage package may alternatively be not sharing the usage package X₁, that is, the usage package X₁ can be deducted only based on a use record of the account A1. The sharing policy of the first usage package may alternatively be: when the usage package X₁ has a margin, the usage package X₁ and the usage package X₂ are randomly deducted, or when the usage package X₁ has no margin, the usage package X₂ is not allowed to be deducted, or the like. It should be understood that the foregoing example is merely used for description. Alternatively, the sharing policy of the first usage package and the sharing policy of the second usage package may directly be a priority sequence of a plurality of accounts (for example, a usage package of an account A1 is deducted first, then a usage package of an account A2 is deducted, and finally, a usage package of an account A3 is deducted), a priority sequence of usage packages (for example, a usage package X₁ is deducted first, then a usage package X₃ is deducted, and finally, a usage package X₅ is deducted), or the like. This is not specifically limited in this application.

In some embodiments, the sharing policy of the first usage package and the sharing policy of the second usage package may further include a time range, and the time range is used to deduct the first usage package or the second usage package based on a use record within the time range. The foregoing example is still used as an example. The first usage package of the first account A1 includes the usage packages X₁ and X₂. In this case, the sharing policy of the first usage package may be that all usage packages of the account A1 are allowed to be deducted based on use records only within a time range of t₁ to t₂ (for example, January to June); or all usage packages of the account A1 are not allowed to be deducted based on use records within a time range of t₃ to t₄ (for example, July to December). The sharing policy of the first usage package may alternatively be that the usage package X₁ of the account A1 is allowed to be deducted based on use records only within a time range of t₁ to t₂; or the usage package X₁ of the account A1 is not allowed to be deducted based on use records within a time range of t₁ to t₂. It should be understood that the foregoing example is merely used for description. The sharing policy of the first usage package and the sharing policy of the second usage package may alternatively directly be time range settings among a plurality of accounts. For example, a usage package of the account A1 is deducted in a period T1, a usage package of the account A2 is deducted in a period T2, and a usage package of the account A3 is deducted in a period T3. This is not specifically limited in this application.

In some embodiments, the sharing policy of the first usage package and the sharing policy of the second usage package may alternatively include an automatic scale-out policy, to be specific, a policy of automatically adding an incremental package when remaining usage of a usage package is not greater than a threshold. The foregoing example is still used as an example. The first usage package of the first account A1 includes the usage packages X₁ and X₂, and the threshold is 10G. In this case, the sharing policy of the first usage package may be automatically adding the usage package X₃ when remaining usage of the usage package X₁ is not greater than 10G. It should be understood that the foregoing example is merely used for description, and this is not specifically limited in this application.

Therefore, in this embodiment of this application, as shown in FIG. 4, the sharing execution plan includes n deduction sequences, a first deduction sequence in the n deduction sequences includes a deduction sequence between usage subpackages B₁₁ and B₂₁ of a first cloud service resource type, a second deduction sequence in the n deduction sequences includes a deduction sequence between usage subpackages B₁₂ and B₂₂ of a second cloud service resource type, ..., and an n^{th} deduction sequence in the n deduction sequences includes a deduction sequence between usage subpackages B₁ₙ and B₂ₙ of an n^{th} cloud service resource type. The first usage package includes usage subpackages B₁₁, B₁₂, ..., and B₁ₙ of n cloud service resource types, the second usage package includes usage subpackages B₂₁, B₂₂, ..., and B₂ₙ of the n cloud service resource types, B₁₁ and B₂₁ are usage subpackages of the first cloud service resource type, B₁₂ and B₂₂ are usage subpackages of the second cloud service resource type, ..., B₁ₙ and B₂ₙ are usage subpackages of the n^{th} cloud service resource type, and n is a natural number.

For example, as shown in FIG. 4, it is assumed that the sharing policy of the first usage package is first using the usage subpackage B₁₂. Therefore, in the sharing execution plan, a deduction sequence B₁₂ > B₂₂ of the second resource type may be obtained. Similarly, it is assumed that the sharing policy of the second usage package is first using the usage subpackages B₂₁ and B₂ₙ. Therefore, in the sharing execution plan, a deduction sequence B₂₁ > B₁₁ of the first resource type and a deduction sequence B₂ₙ > B₁ₙ of the n^{th} resource type may be obtained. It may be understood that, with reference to the foregoing content, each type of usage subpackage may include a plurality of usage packages with same or different duration and quotas. Therefore, if the first resource type of the usage subpackage B₁₁ of the first usage package includes the usage packages X₁ and X₂, the sharing policy of the first usage package is first deducting the usage package X₁ and then deducting the usage package X₂, the first resource type of the usage subpackage B₂₁ of the second usage package includes the usage package X₃, and the sharing policy of the second usage package is first deducting a usage package of the second account A2, a deduction sequence of the first resource type of the usage subpackages is X₃ > X₁ > X₂ in the sharing execution plan. It should be understood that the foregoing example is merely used for description, and does not constitute a specific limitation.

### 2. To-be-deducted queue

In this embodiment of this application, each queue entry in the to-be-deducted queue includes the use record and a to-be-deducted usage package corresponding to the use record. The to-be-deducted usage package corresponding to the use record may be determined according to a deduction sequence corresponding to a cloud service resource type of the use record. The sorting a use record of a usage package of the first account and a use record of a usage package of the second account according to the sharing execution plan, to generate a to-be-deducted queue includes: sorting the use record of the usage package of the first account and the use record of the usage package of the second account based on use time, to obtain a plurality of use records; obtaining, based on a cloud service resource type of each use record in the plurality of use records, a deduction sequence corresponding to each use record; and determining, according to the deduction sequence corresponding to each use record, a to-be-deducted usage package corresponding to each use record, to obtain the to-be-deducted queue. In this way, the charging system 130 can perform deduction for the plurality of accounts according to the to-be-deducted queue in a least-cost deduction sequence, thereby reducing economic losses to the user caused by usage package excess due to an improper deduction sequence, and improving user experience.

The sharing execution plan shown in FIG. 4 is still used as an example. In the sharing execution plan, a deduction sequence of the first resource type is B₂₁ > B₁₁, a deduction sequence of the second resource type is B₂₁ > B₁₁, ..., and a deduction sequence of the n^{th} resource type is B₂ₙ > B₁ₙ. As shown in Table 2, it is assumed that the charging system 130 receives, at a moment T1, use records D₁₁, D₁₂, ..., D₁ₓ of usage packages of the first account and use records D₂₁, D₂₂, ..., D_{2y} of usage packages of the second account that are from a moment T0 to the moment T1 and that are sent by the resource management system 140. After sorting the (x + y) use records based on use time, the charging system 130 determines a resource type corresponding to each use record, obtains a deduction sequence corresponding to the resource type, and obtain a to-be-deducted usage package corresponding to each use record. For example, if a resource type of the use record D₁₁ is a first type, a deduction sequence of the first resource type in the sharing execution plan is B₂₁ > B₁₁. Therefore, a to-be-deducted usage package corresponding to the use record D₁₁ is B₂₁. Similarly, if a resource type of the use record D₁₂ is a second type, a deduction sequence of the second resource type in the sharing execution plan is B₁₂>B₂₂. Therefore, a to-be-deducted usage package corresponding to the use record D₁₂ is B₁₂. It should be understood that data in Table 2 is merely used for description, and does not constitute a specific limitation.

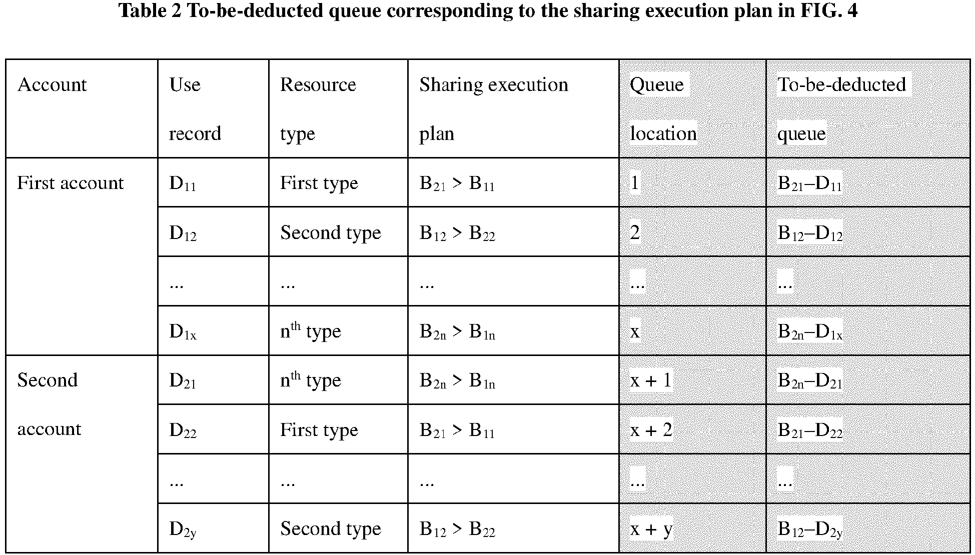

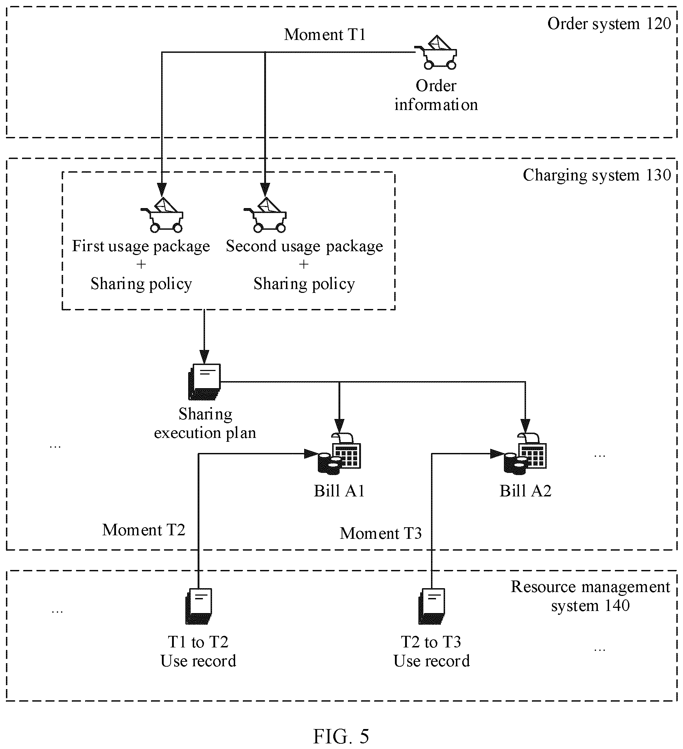

In specific implementation, with reference to the foregoing content, it can be learned that the resource management system 140 pushes the use record of the usage package of the first account and the use record of the usage package of the second account to the charging system 130 once every period T. Therefore, the charging system 130 may generate a sharing execution plan according to a sharing policy of each usage package after the user purchases the usage package by using the portal website 110 and sets the sharing policy of each usage package. In a case in which the user does not modify the sharing policy, after the charging system 130 receives a use record every period T, the charging system 130 may generate a bill based on use record and the sharing execution plan. For example, as shown in FIG. 5, after receiving, at a moment T1, order information that is sent by the order system 120, the charging system 130 may generate a sharing execution plan of the first account and the second account based on a quota of the first usage package, the sharing policy of the first usage package, a quota of the second usage package, and the sharing policy of the second usage package in the order information. After the charging system 130 receives, at a moment T2, a use record that is within duration from T1 to T2 and that is sent by the resource management system 140, the charging system 130 may generate a to-be-deducted queue with reference to the use record and the sharing execution plan, deduct the usage packages according to the to-be-deducted queue, and generate a bill A1. By analogy, until the user sets a new sharing policy, the sharing execution plan is updated according to the new sharing policy. In this way, the charging system 130 can perform deduction for the plurality of accounts according to the to-be-deducted queue in a least-cost deduction sequence, thereby reducing economic losses to the user caused by usage package excess due to an improper deduction sequence, and improving user experience.

The application scenario in Table 1 is still used as an example. The user A has the account A1 and the account A2. The user purchases the ultra-high I/O or high I/O 100G hard disk usage package X1 by using the account A1, and purchases the ultra-high I/O 100G hard disk usage package X2 by using the account A2. It is assumed that a use record received by the charging system 130 shows that the account A1 first uses 50G ultra-high I/O hard disk usage at a moment T0, and then uses 60G ultra-high I/O hard disk usage at a moment T1, and the account A2 uses 50G high I/O hard disk usage at a moment T3. In this case, according to the multi-account cloud service usage package sharing method provided in this application, it is assumed that a sharing policy set by the user is first using the usage package X2 (ultra-high I/O 100G hard disk usage package). Therefore, as shown in Table 3, it may be determined, according to the sharing policy set by the user in the sharing execution plan, that a deduction sequence of the ultra-high I/O hard disk usage packages is X2 > X1. Because the user does not set a deduction policy for the high I/O hard disk usage package, a deduction sequence of the high I/O hard disk usage package is random deduction in the sharing execution plan. Therefore, based on the first use record (50G ultra-high I/O hard disk usage) and the deduction sequence X2 > X1 of the ultra-high I/O hard disk usage packages, it may be obtained that a to-be-deducted usage package corresponding to the first use record is X2, a first queue item in the to-be-deducted queue may be obtained, and by analogy, a to-be-deducted queue shown in a shaded part in Table 3 is obtained. After the charging system 130 deducts the usage packages X1 and X2 according to the to-be-deducted queue, a final bill may be shown in Table 3, and when it is compared with the bill shown in Table 1 in the foregoing content, excess usage of the first account A1 and the second account A2 are 0, and the usage package X1 has 40G remaining usage. This avoids a problem that excess usage is generated due to an improper deduction solution, causing economic losses to the user, and improves user experience. It should be understood that the foregoing example is merely used for description, and does not constitute a specific limitation.

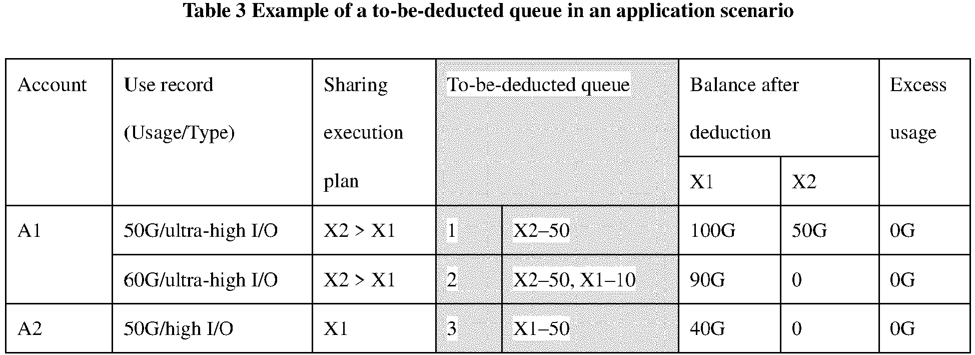

It should be noted that, for better understanding of this application, two accounts are used as an example in the foregoing content to explain the multi-account cloud service usage package sharing method provided in this application. In specific implementation, a quantity of the shared accounts usually is two or more. For a cloud service usage package sharing method for a plurality of (more than two) accounts, similarly, a sharing execution plan of the plurality of accounts may also be determined according to a plurality of sharing policies set by the plurality of accounts. After the charging system 130 receives use records of usage packages of the plurality of accounts, a to-be-deducted queue may be generated according to the sharing execution plan. In this way, the charging system 130 can perform deduction for the plurality of accounts according to the to-be-deducted queue in a least-cost deduction sequence, thereby reducing economic losses to the user caused by usage package excess due to an improper deduction sequence, and improving user experience.

For example, it is assumed that four accounts A1, A2, A3, and A4 are shared accounts, and may be specifically four accounts used by a same user, or may be four accounts used by a plurality of different users. This is not specifically limited herein. It is assumed that at a moment T1, the charging system 130 receives order information sent by the order system 120, and obtains usage packages purchased by using the four accounts, as shown in the following Table 4A.

**Table 4A Example of a usage package purchased by four shared accounts in an application scenario**

| Account | Usage package quota | Cloud service resource type | Symbolic representation |
|---|---|---|---|
| A1 | 100G/hour/three months | Ultra-high I/O | X1 |
| A2 | 100G/hour/three months | High I/O/Ultra-high I/O | X2 |
| A3 | 50G/hour/six months | High I/O | X3 |
| A4 | None | None | None |

A sharing policy of the account A1, a sharing policy of the account A2, a sharing policy of the account A3, and a sharing policy of the account A4 may be shown in the following Table 4B.

**Table 4B Example of sharing policies of four shared accounts in an application scenario**

| Account | Usage package | Sharing policy |
|---|---|---|
| A1 | X1 | A use record of the account A1 is first deducted from the usage package X1, and then a priority of the accounts having remaining usage is A1 > A4 > A3 > A2. |
| A2 | X2 | A usage package of an account A is first used, and then a usage package of an account B is used. |
| A3 | X3 | A usage package of the account A3 is not shared, and a usage package of another account is not used. |
| A4 | X4 | The account A4 participates in sharing when there is remaining usage, and an account deduction priority is random. |

Therefore, with reference to the foregoing content, it can be learned that after the charging system 130 performs step S101 and step S102, a sharing execution plan of the accounts A1, A2, A3, and A4 may be obtained, which may be specifically shown in the following Table 5.

**Table 5 Sharing execution plan of four shared accounts in an application scenario**

| Cloud service resource type | Deduction sequence |
|---|---|
| High I/O | X2, and only X3 that is deducted based on a use record of the account A3 |
| Ultra-high I/O | X1 > X2 |

After the charging system 130 receives use records of the usage packages of the accounts A1, A2, A3, and A4 that are from a moment T1 to a moment T2 and that are sent by the resource management system 140, the charging system 130 performs step S103 to obtain a to-be-deducted queue, which may be specifically shown in Table 6.

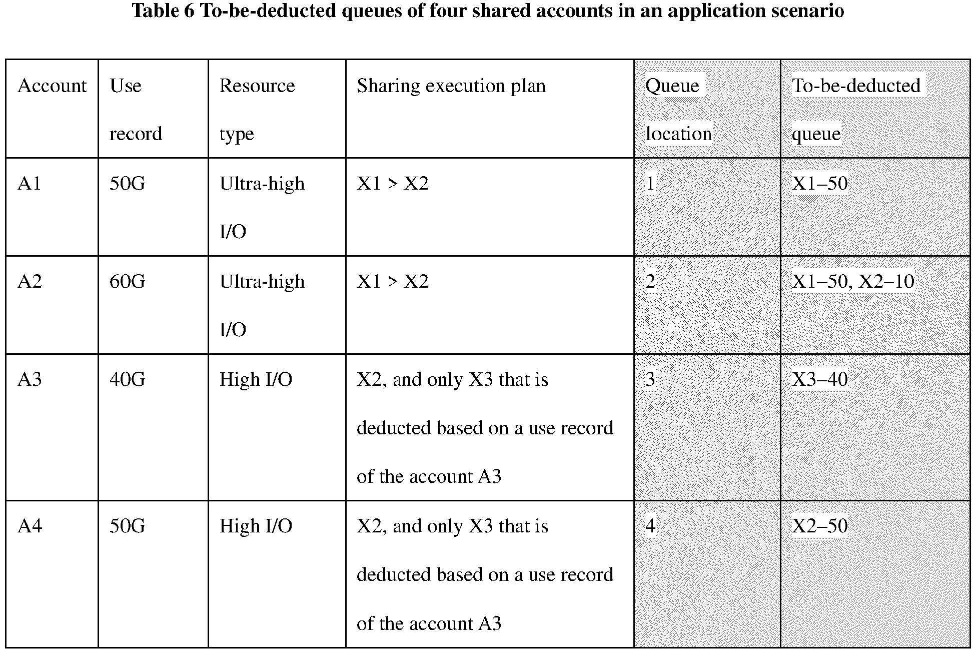

The charging system 130 may sequentially deduct the usage packages according to the to-be-deducted queue shown in Table 6, and generate a bill for subsequent query by the user. In this way, the charging system 130 can perform deduction for the plurality of accounts according to the to-be-deducted queue in a least-cost deduction sequence, thereby reducing economic losses to the user caused by usage package excess due to an improper deduction sequence, and improving user experience. It should be understood that the foregoing Table 4A to Table 6 are merely used as an example for description, and do not constitute a specific limitation.

In this embodiment of this application, the method further includes: receiving a bill query request sent by a client; and in response to the bill query request, sending an updated bill to the client. In other words, when the user queries a bill, the bill pushed by the charging system 130 to the portal website 110 is a bill generated according to the to-be-deducted queue. It may be understood that, with reference to the foregoing content, the resource management system 140 pushes a use record to the charging system 130 once every period T, and the charging system 130 also generates a bill once every period T. Therefore, to facilitate the user to query the bill, the charging system 130 may generate total bill details once every hour, every month, every day, or every year, and collect statistics on bills generated in each period T. For example, if the charging system 130 generates a bill of the previous hour every hour, 24 bills generated in the 24 hours of the previous day may be summarized at 00:00 every day, to generate daily bill details. Similarly, monthly bill details and annual bill details may be generated, which facilitates the user to query and improves user experience.

In this embodiment of this application, a cloud service management platform 100 that implements the multi-account cloud service usage package sharing method provided in this application only needs to perform a simple upgrade on the portal website 110, and add an option used to receive a sharing policy of a usage package purchased by each account. Then, the charging system 130 performs step S101 to step S104, to generate a sharing execution plan of a plurality of accounts according to the sharing policy of the usage package purchased by each account, and generate a to-be-deducted queue according to a use record and the sharing execution plan. In this way, the charging system 130 can perform deduction for the plurality of accounts according to the to-be-deducted queue in a least-cost deduction sequence, thereby reducing economic losses to the user caused by usage package excess due to an improper deduction sequence, and improving user experience.

It may be understood that, in this application, the sharing execution plan of a plurality of accounts is determined based on sharing policies set by a user, and after use records that are of the plurality of accounts and that are sent by a resource management system 140 are received, a to-be-deducted queue is generated based on the sharing execution plan. In this way, a charging system 130 can perform deduction for the plurality of accounts according to the to-be-deducted queue in a least-cost deduction sequence, thereby reducing economic losses to the user caused by usage package excess due to an improper deduction sequence, and improving user experience.

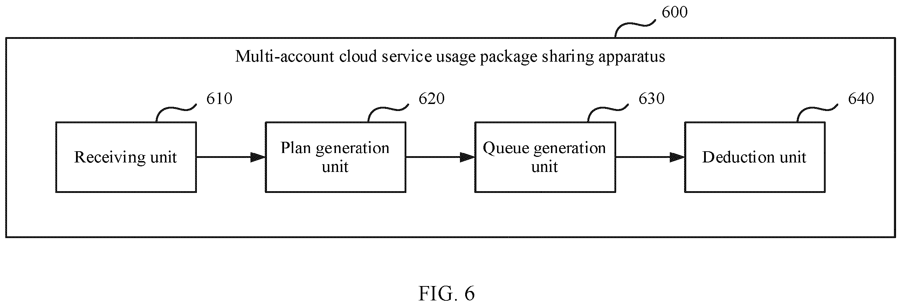

The following describes some apparatuses in this application. As shown in FIG. 6, this application provides a multi-account cloud service usage package sharing apparatus 600, including a receiving unit 610, a plan generation unit 620, a queue generation unit 630, and a deduction unit 640.

The receiving unit 610 is configured to receive a sharing policy of a first usage package of a first account and a sharing policy of a second usage package of a second account.

The plan generation unit 620 is configured to generate a sharing execution plan according to the sharing policy of the first usage package and the sharing policy of the second usage package.

The queue generation unit 630 is configured to sort a use record of a usage package of the first account and a use record of a usage package of the second account according to the sharing execution plan, to generate a to-be-deducted queue.

The deduction unit 640 is configured to deduct the first usage package and the second usage package according to the to-be-deducted queue.

Specifically, the first usage package includes usage subpackages B₁₁, B₁₂, ..., and B₁ₙ of n cloud service resource types, the second usage package includes usage subpackages B₂₁, B₂₂, ..., and B₂ₙ of the n cloud service resource types, B₁₁ and B₂₁ are usage subpackages of a first cloud service resource type, B₁₂ and B₂₂ are usage subpackages of a second cloud service resource type, ..., B₁ₙ and B₂ₙ are usage subpackages of an n^{th} cloud service resource type, and n is a natural number. The sharing execution plan includes n deduction sequences, a first deduction sequence in the n deduction sequences includes a deduction sequence between the usage subpackages B₁₁ and B₂₁ of the first cloud service resource type, a second deduction sequence in the n deduction sequences includes a deduction sequence between the usage subpackages B₁₂ and B₂₂ of the second cloud service resource type, ..., and an n^{th} deduction sequence in the n deduction sequences includes a deduction sequence between the usage subpackages B₁ₙ and B₂ₙ of the n^{th} cloud service resource type.

In specific implementation, the queue generation unit 630 is configured to sort the use record of the usage package of the first account and the use record of the usage package of the second account based on use time, to obtain a plurality of use records. The queue generation unit is configured to obtain, based on a cloud service resource type of each use record in the plurality of use records, a deduction sequence corresponding to each use record. The queue generation unit is configured to determine, according to the deduction sequence corresponding to each use record, a to-be-deducted usage package corresponding to each use record, to obtain the to-be-deducted queue. Each queue entry in the to-be-deducted queue includes the use record and the to-be-deducted usage package corresponding to the use record.

In an embodiment, the sharing policy of the first usage package includes first deducting the first usage package, or first deducting one or more usage subpackages in the first usage package. The sharing policy of the second usage package includes first deducting the second usage package, or first deducting one or more usage subpackages in the second usage package.

In an embodiment, the sharing policy of the first usage package and the sharing policy of the second usage package each include a time range, and the time range is used to deduct the first usage package or the second usage package based on a use record within the time range.

During actual application, units included in the multi-account cloud service usage package sharing apparatus 600 in this embodiment of this application may be a software unit, or may be a hardware unit, or may be some software units and some hardware units. This is not specifically limited in this application.

It may be understood that, in this application, the sharing execution plan of a plurality of accounts is determined based on sharing policies set by a user, and after use records that are of the plurality of accounts and that are sent by a resource management system 140 are received, a to-be-deducted queue is generated based on the sharing execution plan. In this way, a charging system 130 can perform deduction for the plurality of accounts according to the to-be-deducted queue in a least-cost deduction sequence, thereby reducing economic losses to the user caused by usage package excess due to an improper deduction sequence, and improving user experience.

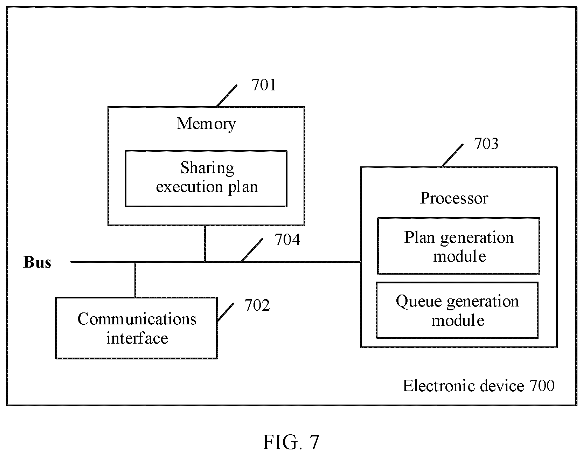

FIG. 7 is a schematic diagram of a structure of an electronic device 700 according to an embodiment of this application. The electronic device 700 may be the charging system 130 in the foregoing content. As shown in FIG. 7, the electronic device 700 includes one or more processors 703, a communications interface 702, and a memory 701. The processor 703, the communications interface 702, and the memory 701 may be connected in a bus manner, or may implement communication by using another means such as wireless transmission. In this embodiment of this application, a connection by using a bus 704 is used as an example. The bus 704 may be a peripheral component interconnect (Peripheral Component Interconnect, PCI) bus, an extended industry standard architecture (Extended Industry Standard Architecture, EISA) bus, or the like. The bus 704 may be classified into an address bus, a data bus, a control bus, and the like. For ease of representation, only one thick line is used to represent the bus in FIG. 7, but this does not mean that there is only one bus or only one type of bus.

The memory 701 may include a volatile memory (Volatile Memory), for example, a random access memory (Random Access Memory, RAM). The memory 701 may alternatively include a non-volatile memory (Non-Volatile Memory, NVM), for example, a read-only memory (Read-Only Memory, ROM), a flash memory (Flash Memory, FM), a hard disk drive (Hard Disk Drive, HDD), or a solid-state drive (Solid-State Drive, SSD). The memory 701 may further include a combination of the foregoing types of memories. The memory 701 may store program code and program data. For example, the memory 701 may store program code used to generate a sharing execution plan according to a deduction policy of a first usage package and a deduction policy of a second usage package, program code used to generate a to-be-deducted queue according to the sharing execution plan, and based on a use record of a usage package of a first account and a use record of a usage package of a second account, and the like, and also store the sharing execution plan, the use records, bill details, order information, and the like.

The communications interface 702 may be a wired interface (for example, an Ethernet interface), or may be an internal interface (for example, a high-speed serial computer extended bus (Peripheral Component Interconnect express (PCIe) interface)), a wired interface (for example, an Ethernet interface), or a wireless interface (for example, a cellular network interface or a wireless local area network interface), and configured to communicate with another device or module. For example, the communications interface 702 is configured to support the electronic device 700 to communicate with the order system 120 and the resource management system 140, and/or is configured to perform another step of the technology described in this specification. Details are not described herein again.

The processor 703 includes one or more general-purpose processors. The general-purpose processor may be any type of device capable of processing electronic instructions, and includes a central processing unit (Central Processing Unit, CPU), a microprocessor, a microcontroller, a main processor, a controller, an ASIC, and the like. The processor 703 is configured to execute various types of digital storage instructions, for example, software or firmware programs stored in the memory 701, so that the computing device is enabled to provide various services of a relatively wide range.

Specifically, the processor 703 may include at least a plan generation module and a queue generation module. The plan generation module may include the functions described by the plan generation unit in FIG. 6, for example, generating the sharing execution plan according to the deduction policy of the first usage package and the deduction policy of the second usage package, and the plan generation module may also be configured to perform the other steps described in the embodiments in FIG. 3 to FIG. 5. Details are not described herein again. The queue generation module may include the functions described by the queue generation unit in FIG. 6, for example, generating a to-be-deducted queue according to the sharing execution plan, and based on the use record of the usage package of the first account and the use record of the usage package of the second account, and the queue generation module may also be configured to perform the other steps described in the embodiments in FIG. 3 to FIG. 5. Details are not described herein again. In addition, for each function module or unit not mentioned herein, refer to the related descriptions in the foregoing embodiments shown in FIG. 3 to FIG. 5. Details are not described herein again.

It should be noted that FIG. 7 is merely a possible implementation of this embodiment of this application. During actual application, the electronic device 700 may alternatively be a cloud service cluster, the cloud service cluster includes at least one computing node, and each computing node may be the electronic device shown in FIG. 7. Details are not described herein again. The electronic device may further include more or fewer components. This is not limited herein.

An embodiment of this application further provides a computer-readable storage medium. The computer-readable storage medium stores instructions. When the instructions are run on a processor, the method procedure shown in FIG. 3 to FIG. 5 is implemented.

An embodiment of this application further provides a computer program product. When the computer program product is run on a processor, the method procedure shown in FIG. 3 to FIG. 5 is implemented.

All or a part of the foregoing embodiments may be implemented by using software, hardware, firmware, or any combination thereof. When the software is used to implement the embodiments, all or a part of the foregoing embodiments may be implemented in a form of a computer program product. The computer program product includes one or more computer instructions. When the computer program instructions are loaded or executed on a computer, the procedure or functions according to the embodiments of the present invention are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a high density digital video disc (Digital Video Disc, DVD)), a semiconductor medium, or the like. The semiconductor medium may be an SSD.

The foregoing descriptions are merely specific implementations of the present invention, but are not intended to limit the protection scope of the present invention. Therefore, the protection scope of the present invention shall be subject to the protection scope of the claim.

## Claims

1. A computer implemented multi-account cloud service usage package sharing method, comprising:
(S101)receiving a sharing policy of a first usage package of a first account and a sharing policy of a second usage package of a second account;
(S102)generating a sharing execution plan according to the sharing policy of the first usage package and the sharing policy of the second usage package, wherein both the first usage package and the second usage package include usage subpackages of n cloud service resource types, and n is a natural number, wherein the sharing execution plan includes n deduction sequences, and each deduction sequence includes a deduction sequence between usage subpackages of a same cloud service resource type;
(S103)sorting a use record of a usage package of the first account and a use record of a usage package of the second account according to the sharing execution plan, to generate a to-be-deducted queue; and
(S104)deducting the first usage package and the second usage package according to the to-be-deducted queue.

2. The method according to claim 1, wherein the first usage package comprises usage subpackages B₁₁, B₁₂, ..., and B₁ₙ of n cloud service resource types, the second usage package comprises usage subpackages B₂₁, B₂₂, ..., and B₂ₙ of the n cloud service resource types, B₁₁ and B₂₁ are usage subpackages of a first cloud service resource type, B₁₂ and B₂₂ are usage subpackages of a second cloud service resource type, ..., B₁ₙ and B₂ₙ are usage subpackages of an n^{th} cloud service resource type, and n is a natural number; and
the sharing execution plan comprises n deduction sequences, a first deduction sequence in the n deduction sequences comprises a deduction sequence between the usage subpackages B₁₁ and B₂₁ of the first cloud service resource type, a second deduction sequence in the n deduction sequences comprises a deduction sequence between the usage subpackages B₁₂ and B₂₂ of the second cloud service resource type, ..., and an n^{th} deduction sequence in the n deduction sequences comprises a deduction sequence between the usage subpackages B₁ₙ and B₂ₙ of the n^{th} cloud service resource type.

3. The method according to claim 2, wherein the sorting a use record of a usage package of the first account and a use record of a usage package of the second account according to the sharing execution plan, to generate a to-be-deducted queue comprises:
sorting the use record of the usage package of the first account and the use record of the usage package of the second account based on use time, to obtain a plurality of use records;
obtaining, based on a cloud service resource type of each use record in the plurality of use records, a deduction sequence corresponding to each use record; and
determining, according to the deduction sequence corresponding to each use record, a to-be-deducted usage package corresponding to each use record, to obtain the to-be-deducted queue, wherein each queue entry in the to-be-deducted queue comprises the use record and the to-be-deducted usage package corresponding to the use record.

4. The method according to any one of claims 1 and 3, wherein the sharing policy of the first usage package comprises first deducting the first usage package, or first deducting one or more usage subpackages in the first usage package; and
the sharing policy of the second usage package comprises first deducting the second usage package, or first deducting one or more usage subpackages in the second usage package.

5. The method according to any one of claims 1 to 4, wherein the sharing policy of the first usage package and the sharing policy of the second usage package each comprise a time range, and the time range is used to deduct the first usage package or the second usage package based on a use record within the time range.

6. A multi-account cloud service usage package sharing apparatus, comprising a receiving unit(610), a plan generation unit(620), a queue generation unit(630), and a deduction unit(640), wherein
the receiving unit(610) is configured to receive a sharing policy of a first usage package of a first account and a sharing policy of a second usage package of a second account;
the plan generation unit(620) is configured to generate a sharing execution plan according to the sharing policy of the first usage package and the sharing policy of the second usage package, wherein both the first usage package and the second usage package include usage subpackages of n cloud service resource types, and n is a natural number, wherein the sharing execution plan includes n deduction sequences, and each deduction sequence includes a deduction sequence between usage subpackages of a same cloud service resource type;
the queue generation unit(630) is configured to sort a use record of a usage package of the first account and a use record of a usage package of the second account according to the sharing execution plan, to generate a to-be-deducted queue; and
the deduction unit(640) is configured to deduct the first usage package and the second usage package according to the to-be-deducted queue.

7. The apparatus according to claim 6, wherein the first usage package comprises usage subpackages B₁₁, B₁₂, ..., and B₁ₙ of n cloud service resource types, the second usage package comprises usage subpackages B₂₁, B₂₂, ..., and B₂ₙ of the n cloud service resource types, B₁₁ and B₂₁ are usage subpackages of a first cloud service resource type, B₁₂ and B₂₂ are usage subpackages of a second cloud service resource type, ..., B₁ₙ and B₂ₙ are usage subpackages of an n^{th} cloud service resource type, and n is a natural number; and
the sharing execution plan comprises n deduction sequences, a first deduction sequence in the n deduction sequences comprises a deduction sequence between the usage subpackages B₁₁ and B₂₁ of the first cloud service resource type, a second deduction sequence in the n deduction sequences comprises a deduction sequence between the usage subpackages B₁₂ and B₂₂ of the second cloud service resource type, ..., and an n^{th} deduction sequence in the n deduction sequences comprises a deduction sequence between the usage subpackages B₁ₙ and B₂ₙ of the n^{th} cloud service resource type.

8. The apparatus according to claim 7, wherein
the queue generation unit(630) is configured to sort the use record of the usage package of the first account and the use record of the usage package of the second account based on use time, to obtain a plurality of use records;
the queue generation unit(630) is configured to obtain, based on a cloud service resource type of each use record in the plurality of use records, a deduction sequence corresponding to each use record; and
the queue generation unit(630) is configured to determine, according to the deduction sequence corresponding to each use record, a to-be-deducted usage package corresponding to each use record, to obtain the to-be-deducted queue, wherein each queue entry in the to-be-deducted queue comprises the use record and the to-be-deducted usage package corresponding to the use record.

9. The apparatus according to any one of claims 6 to 8, wherein the sharing policy of the first usage package comprises first deducting the first usage package, or first deducting one or more usage subpackages in the first usage package; and
the sharing policy of the second usage package comprises first deducting the second usage package, or first deducting one or more usage subpackages in the second usage package.

10. The apparatus according to any one of claims 6 to 9, wherein the sharing policy of the first usage package and the sharing policy of the second usage package each comprise a time range, and the time range is used to deduct the first usage package or the second usage package based on a use record within the time range.

11. A computer program product, wherein when the computer program product is read and executed by a computing device, the method according to any one of claims 1 to 5 is performed.

12. A computer non-transitory storage medium, comprising instructions, wherein when the instructions are run on a computing device, the computing device is enabled to perform the method according to any one of claims 1 to 5.

## Patentansprüche

1. Computerimplementiertes Verfahren zur gemeinsamen Nutzung eines Cloud-Dienstnutzungspakets mit mehreren Konten, umfassend:
(S101) Empfangen einer Richtlinie zur gemeinsamen Nutzung eines ersten Nutzungspakets eines ersten Kontos und einer Richtlinie zur gemeinsamen Nutzung eines zweiten Nutzungspakets eines zweiten Kontos;
(S102) Erzeugen eines Ausführungsplans zur gemeinsamen Nutzung gemäß der Richtlinie zur gemeinsamen Nutzung des ersten Nutzungspakets und der Richtlinie zur gemeinsamen Nutzung des zweiten Nutzungspakets, wobei sowohl das erste Nutzungspaket als auch das zweite Nutzungspaket Nutzungsunterpakete von n Cloud-Dienstressourcentypen beinhalten und n eine natürliche Zahl ist, wobei der Ausführungsplan zur gemeinsamen Nutzung n Ableitungssequenzen beinhaltet und jede Ableitungssequenz eine Ableitungssequenz zwischen Nutzungsunterpaketen des gleichen Cloud-Dienstressourcentyps beinhaltet;
(S103) Sortieren einer Nutzungsaufzeichnung eines Nutzungspakets des ersten Kontos und einer Nutzungsaufzeichnung eines Nutzungspakets des zweiten Kontos gemäß dem Ausführungsplan zur gemeinsamen Nutzung, um eine abzuleitende Warteschlange zu erzeugen; und
(S104) Ableiten des ersten Nutzungspakets und des zweiten Nutzungspakets gemäß der abzuleitenden Warteschlange.

2. Verfahren nach Anspruch 1, wobei das erste Nutzungspaket Nutzungsunterpakete B₁₁, B₁₂, ... und B₁ₙ von n Cloud-Dienstressourcentypen umfasst, das zweite Nutzungspaket Nutzungsunterpakete B₂₁, B₂₂, ... und B₂ₙ der n Cloud-Dienstressourcentypen umfasst, B₁₁ und B₂₁ Nutzungsunterpakete eines ersten Cloud-Dienstressourcentyps sind, B₁₂ und B₂₂ Nutzungsunterpakete eines zweiten Cloud-Dienstressourcentyps sind, ..., B₁ₙ und B₂ₙ Nutzungsunterpakete eines n-^{ten} Cloud-Dienstressourcentyps sind und n eine natürliche Zahl ist; und der Ausführungsplan zur gemeinsamen Nutzung n Ableitungssequenzen umfasst, eine erste Ableitungssequenz in den n Ableitungssequenzen eine Ableitungssequenz zwischen den Nutzungsunterpaketen B₁₁ und B₂₁ des ersten Cloud-Dienstressourcentyps umfasst, eine zweite Ableitungssequenz in den n Ableitungssequenzen eine Ableitungssequenz zwischen den Nutzungsunterpaketen B₁₂ und B₂₂ des zweiten Cloud-Dienstressourcentyps umfasst, ..., und eine n-^{te} Ableitungssequenz in den n Ableitungssequenzen eine Ableitungssequenz zwischen den Nutzungsunterpaketen B₁ₙ und B₂ₙ des n-^{ten} Cloud-Dienstressourcentyps umfasst.

3. Verfahren nach Anspruch 2, wobei das Sortieren einer Nutzungsaufzeichnung eines Nutzungspakets des ersten Kontos und einer Nutzungsaufzeichnung eines Nutzungspakets des zweiten Kontos gemäß dem Ausführungsplan zur gemeinsamen Nutzung, um eine abzuleitende Warteschlange zu erzeugen, Folgendes umfasst:
Sortieren der Nutzungsaufzeichnung des Nutzungspakets des ersten Kontos und der Nutzungsaufzeichnung des Nutzungspakets des zweiten Kontos basierend auf einer Nutzungszeit, um eine Vielzahl von Nutzungsaufzeichnungen zu erlangen;
Erlangen, basierend auf einem Cloud-Dienstressourcentyp jeder Nutzungsaufzeichnung in der Vielzahl von Nutzungsaufzeichnungen, einer Ableitungssequenz, die jeder Nutzungsaufzeichnung entspricht; und
Bestimmen, gemäß der Ableitungssequenz, die jeder Nutzungsaufzeichnung entspricht, eines abzuleitenden Nutzungspakets, das jeder Nutzungsaufzeichnung entspricht, um die abzuleitende Warteschlange zu erlangen, wobei jeder Warteschlangeneintrag in der abzuleitenden Warteschlange die Nutzungsaufzeichnung und das abzuleitende Nutzungspaket, das der Nutzungsaufzeichnung entspricht, umfasst.

4. Verfahren nach einem der Ansprüche 1 und 3, wobei die Richtlinie zur gemeinsamen Nutzung des ersten Nutzungspakets zuerst ein Ableiten des ersten Nutzungspakets oder zuerst ein Ableiten eines oder mehrerer Nutzungsunterpakete in dem ersten Nutzungspaket umfasst; und
die Richtlinie zur gemeinsamen Nutzung des zweiten Nutzungspakets zuerst ein Ableiten des zweiten Nutzungspakets umfasst oder zuerst ein Ableiten von einem oder mehreren Nutzungsunterpaketen in dem zweiten Nutzungspaket umfasst.

5. Verfahren nach einem der Ansprüche 1 bis 4, wobei die Richtlinie zur gemeinsamen Nutzung des ersten Nutzungspakets und die Richtlinie zur gemeinsamen Nutzung des zweiten Nutzungspakets jeweils einen Zeitbereich umfassen und der Zeitbereich dazu verwendet wird, das erste Nutzungspaket oder das zweite Nutzungspaket basierend auf einer Nutzungsaufzeichnung innerhalb des Zeitbereichs abzuleiten.

6. Einrichtung zur gemeinsamen Nutzung eines Cloud-Dienstnutzungspakets mit mehreren Konten, umfassend eine Empfangseinheit (610), eine Planerzeugungseinheit (620), eine Warteschlangenerzeugungseinheit (630) und eine Ableitungseinheit (640), wobei
die Empfangseinheit (610) dazu konfiguriert ist, eine Richtlinie zur gemeinsamen Nutzung eines ersten Nutzungspakets eines ersten Kontos und eine Richtlinie zur gemeinsamen Nutzung eines zweiten Nutzungspakets eines zweiten Kontos zu empfangen;
die Planerzeugungseinheit (620) dazu konfiguriert ist, einen Ausführungsplan zur gemeinsamen Nutzung gemäß der Richtlinie zur gemeinsamen Nutzung des ersten Nutzungspakets und der Richtlinie zur gemeinsamen Nutzung des zweiten Nutzungspakets zu erzeugen, wobei sowohl das erste Nutzungspaket als auch das zweite Nutzungspaket Nutzungsunterpakete von n Cloud-Dienstressourcentypen beinhalten und n eine natürliche Zahl ist, wobei der Ausführungsplan zur gemeinsamen Nutzung n Ableitungssequenzen beinhaltet und jede Ableitungssequenz eine Ableitungssequenz zwischen Nutzungsunterpaketen des gleichen Cloud-Dienstressourcentyps beinhaltet;
die Warteschlangenerzeugungseinheit (630) dazu konfiguriert ist, eine Nutzungsaufzeichnung eines Nutzungspakets des ersten Kontos und eine Nutzungsaufzeichnung eines Nutzungspakets des zweiten Kontos gemäß dem Ausführungsplan zur gemeinsamen Nutzung zu sortieren, um eine abzuleitende Warteschlange zu erzeugen; und
die Ableitungseinheit (640) dazu konfiguriert ist, das erste Nutzungspaket und das zweite Nutzungspaket gemäß der abzuleitenden Warteschlange abzuleiten.

7. Einrichtung nach Anspruch 6, wobei das erste Nutzungspaket Nutzungsunterpakete B₁₁, B₁₂, ... und B₁ₙ von n Cloud-Dienstressourcentypen umfasst, das zweite Nutzungspaket Nutzungsunterpakete B₂₁, und B₂₂, ... und B₂ₙ der n Cloud-Dienstressourcentypen umfasst, B₁₁ und B₂₁ Nutzungsunterpakete eines ersten Cloud-Dienstressourcentyps sind, B₁₂ und B₂₂ Nutzungsunterpakete eines zweiten Cloud-Dienstressourcentyps sind, ..., B₁ₙ und B₂ₙ Nutzungsunterpakete eines n-^{ten} Cloud-Dienstressourcentyps sind und n eine natürliche Zahl ist und
der Ausführungsplan zur gemeinsamen Nutzung n Ableitungssequenzen umfasst, eine erste Ableitungssequenz in den n Ableitungssequenzen eine Ableitungssequenz zwischen den Nutzungsunterpaketen B₁₁ und B₂₁ des ersten Cloud-Dienstressourcentyps umfasst, eine zweite Ableitungssequenz in den n Ableitungssequenzen eine Ableitungssequenz zwischen den Nutzungsunterpaketen B₁₂ und B₂₂ des zweiten Cloud-Dienstressourcentyps umfasst, ..., und eine n-^{te} Ableitungssequenz in den n Ableitungssequenzen eine Ableitungssequenz zwischen den Nutzungsunterpaketen B₁ₙ und B₂ₙ des n-^{ten} Cloud-Dienstressourcentyps umfasst.

8. Einrichtung nach Anspruch 7, wobei
die Warteschlangenerzeugungseinheit (630) dazu konfiguriert ist, die Nutzungsaufzeichnung des Nutzungspakets des ersten Kontos und die Nutzungsaufzeichnung des Nutzungspakets des zweiten Kontos basierend auf einer Nutzungszeit zu sortieren, um eine Vielzahl von Nutzungsaufzeichnungen zu erlangen;
die Warteschlangenerzeugungseinheit (630) dazu konfiguriert ist, basierend auf einem Cloud-Dienstressourcentyp jeder Nutzungsaufzeichnung in der Vielzahl von Nutzungsaufzeichnungen eine Ableitungssequenz, die jeder Nutzungsaufzeichnung entspricht, zu erlangen; und
die Warteschlangenerzeugungseinheit (630) dazu konfiguriert ist, gemäß der Ableitungssequenz, die jeder Nutzungsaufzeichnung entspricht, ein abzuleitendes Nutzungspaket, das jeder Nutzungsaufzeichnung entspricht, zu bestimmen, um die abzuleitende Warteschlange zu erlangen, wobei jeder Warteschlangeneintrag in der abzuleitenden Warteschlange die Nutzungsaufzeichnung und das abzuleitende Nutzungspaket, das der Nutzungsaufzeichnung entspricht, umfasst.

9. Einrichtung nach einem der Ansprüche 6 bis 8, wobei die Richtlinie zur gemeinsamen Nutzung des ersten Nutzungspakets zuerst ein Ableiten des ersten Nutzungspakets oder zuerst ein Ableiten eines oder mehrerer Nutzungsunterpakete in dem ersten Nutzungspaket umfasst; und
die Richtlinie zur gemeinsamen Nutzung des zweiten Nutzungspakets zuerst ein Ableiten des zweiten Nutzungspakets umfasst oder zuerst ein Ableiten von einem oder mehreren Nutzungsunterpaketen in dem zweiten Nutzungspaket umfasst.

10. Einrichtung nach einem der Ansprüche 6 bis 9, wobei die Richtlinie zur gemeinsamen Nutzung des ersten Nutzungspakets und die Richtlinie zur gemeinsamen Nutzung des zweiten Nutzungspakets jeweils einen Zeitbereich umfassen und der Zeitbereich dazu verwendet wird, das erste Nutzungspaket oder das zweite Nutzungspaket basierend auf einer Nutzungsaufzeichnung innerhalb des Zeitbereichs abzuleiten.

11. Computerprogrammprodukt, wobei, wenn das Computerprogrammprodukt durch eine Rechenvorrichtung gelesen und ausgeführt wird, das Verfahren nach einem der Ansprüche 1 bis 5 durchgeführt wird.

12. Nichtflüchtiges Computerspeichermedium, umfassend Anweisungen, wobei, wenn die Anweisungen auf einer Rechenvorrichtung laufen, die Rechenvorrichtung in die Lage versetzt wird, das Verfahren nach einem der Ansprüche 1 bis 5 durchzuführen.

## Revendications

1. Procédé de partage de paquet d'utilisation d'un service sur le nuage à comptes multiples mis en œuvre par ordinateur, comprenant :
(S101) la réception d'une politique de partage d'un premier paquet d'utilisation d'un premier compte et d'une politique de partage d'un second paquet d'utilisation d'un second compte ;
(S102) la génération d'un plan d'exécution de partage selon la politique de partage du premier paquet d'utilisation et la politique de partage du second paquet d'utilisation, dans lequel le premier paquet d'utilisation et le second paquet d'utilisation comportent tous deux des sous-paquets d'utilisation de n types de ressources de service sur le nuage, et n est un nombre naturel, dans lequel le plan d'exécution de partage comporte n séquences de déduction, et chaque séquence de déduction comporte une séquence de déduction entre des sous-paquets d'utilisation d'un même type de ressource de service sur le nuage ;
(S103) le tri d'un enregistrement d'utilisation d'un paquet d'utilisation du premier compte et d'un enregistrement d'utilisation d'un paquet d'utilisation du second compte selon le plan d'exécution de partage, pour générer une file d'attente à déduire ; et
(S104) la déduction du premier paquet d'utilisation et du second paquet d'utilisation selon la file d'attente à déduire.

2. Procédé selon la revendication 1, dans lequel le premier paquet d'utilisation comprend les sous-paquets d'utilisation B₁₁, B₁₂, ... et B₁ₙ de n types de ressources de service sur le nuage, le second paquet d'utilisation comprend les sous-paquets d'utilisation B₂₁, B₂₂, ... , et B₂ₙ des n types de ressources de service sur le nuage, B₁₁ et B₂₁ sont des sous-paquets d'utilisation d'un premier type de ressource de service sur le nuage, B₁₂ et B₂₂ sont des sous-paquets d'utilisation d'un second type de ressource de service sur le nuage,..., B₁ₙ et B₂ₙ sont des sous-paquets d'utilisation d'un n^{-ième} type de ressource de service sur le nuage, et n est un nombre naturel ; et
le plan d'exécution de partage comprend n séquences de déduction, une première séquence de déduction dans les n séquences de déduction comprend une séquence de déduction entre les sous-paquets d'utilisation B₁₁ et B₂₁ du premier type de ressource de service sur le nuage, une seconde séquence de déduction dans les n séquences de déduction comprend une séquence de déduction entre les sous-paquets d'utilisation B₁₂ et B₂₂ du second type de ressource de service sur le nuage,..., et une n^{-ième} séquence de déduction dans les n séquences de déduction comprend une séquence de déduction entre les sous-paquets d'utilisation B₁ₙ et B₂ₙ du n^{-ième} type de ressource de service sur le nuage.

3. Procédé selon la revendication 2, dans lequel le tri d'un enregistrement d'utilisation d'un paquet d'utilisation du premier compte et d'un enregistrement d'utilisation d'un paquet d'utilisation du second compte, selon le plan d'exécution de partage, pour générer une file d'attente à déduire, comprend :
le tri de l'enregistrement d'utilisation du paquet d'utilisation du premier compte et de l'enregistrement d'utilisation du paquet d'utilisation du second compte sur la base du temps d'utilisation, pour obtenir une pluralité d'enregistrements d'utilisation ;
l'obtention, sur la base d'un type de ressource de service sur le nuage de chaque enregistrement d'utilisation dans la pluralité d'enregistrements d'utilisation, d'une séquence de déduction correspondant à chaque enregistrement d'utilisation ; et
la détermination, selon la séquence de déduction correspondant à chaque enregistrement d'utilisation, d'un paquet d'utilisation à déduire correspondant à chaque enregistrement d'utilisation, pour obtenir la file d'attente à déduire, dans lequel chaque entrée de file d'attente dans la file d'attente à déduire comprend l'enregistrement d'utilisation et le paquet d'utilisation à déduire correspondant à l'enregistrement d'utilisation.

4. Procédé selon l'une quelconque des revendications 1 et 3, dans lequel la politique de partage du premier paquet d'utilisation comprend la déduction préalable du premier paquet d'utilisation, ou la déduction préalable d'un ou de plusieurs sous-paquets d'utilisation du premier paquet d'utilisation ; et la politique de partage du second paquet d'utilisation comprend la déduction préalable du second paquet d'utilisation, ou la déduction préalable d'un ou de plusieurs sous-paquets d'utilisation dans le second paquet d'utilisation.

5. Procédé selon l'une quelconque des revendications 1 à 4, dans lequel la politique de partage du premier paquet d'utilisation et la politique de partage du second paquet d'utilisation comprennent chacune une plage de temps, et la plage de temps est utilisée pour déduire le premier paquet d'utilisation ou le second paquet d'utilisation sur la base d'un enregistrement d'utilisation dans la plage de temps.

6. Appareil de partage de paquet d'utilisation d'un service sur le nuage à comptes multiples, comprenant une unité de réception (610), une unité de génération de plan (620), une unité de génération de file d'attente (630) et une unité de déduction (640), dans lequel
l'unité de réception (610) est configurée pour recevoir une politique de partage d'un premier paquet d'utilisation d'un premier compte et une politique de partage d'un second paquet d'utilisation d'un second compte ;
l'unité de génération de plan (620) est configurée pour générer un plan d'exécution de partage selon la politique de partage du premier paquet d'utilisation et la politique de partage du second paquet d'utilisation, dans lequel le premier paquet d'utilisation et le second paquet d'utilisation comportent tous deux des sous-paquets d'utilisation de n types de ressources de service sur le nuage, et n est un nombre naturel, dans lequel le plan d'exécution de partage comporte n séquences de déduction, et chaque séquence de déduction comporte une séquence de déduction entre des sous-paquets d'utilisation d'un même type de ressource de service sur le nuage ;
l'unité de génération de file d'attente (630) est configurée pour trier un enregistrement d'utilisation d'un paquet d'utilisation du premier compte et un enregistrement d'utilisation d'un paquet d'utilisation du second compte selon le plan d'exécution de partage, pour générer une file d'attente à déduire ; et
l'unité de déduction (640) est configurée pour déduire le premier paquet d'utilisation et le second paquet d'utilisation selon la file d'attente à déduire.

7. Appareil selon la revendication 6, dans lequel le premier paquet d'utilisation comprend les sous-paquets d'utilisation B₁₁, B₁₂, ... et B₁ₙ de n types de ressources de service sur le nuage, le second paquet d'utilisation comprend les sous-paquets d'utilisation B₂₁, B₂₂, ... , et B₂ₙ des n types de ressources de service sur le nuage, B₁₁ et B₂₁ sont des sous-paquets d'utilisation d'un premier type de ressource de service sur le nuage, B₁₂ et B₂₂ sont des sous-paquets d'utilisation d'un second type de ressource de service sur le nuage,..., B₁ₙ et B₂ₙ sont des sous-paquets d'utilisation d'un n^{-ième} type de ressource de service sur le nuage, et n est un nombre naturel, et
le plan d'exécution de partage comprend n séquences de déduction, une première séquence de déduction dans les n séquences de déduction comprend une séquence de déduction entre les sous-paquets d'utilisation B₁₁ et B₂₁ du premier type de ressource de service sur le nuage, une seconde séquence de déduction dans les n séquences de déduction comprend une séquence de déduction entre les sous-paquets d'utilisation B₁₂ et B₂₂ du second type de ressource de service sur le nuage,..., et une n^{-ième} séquence de déduction dans les n séquences de déduction comprend une séquence de déduction entre les sous-paquets d'utilisation B₁ₙ et B₂ₙ du n^{-ième} type de ressource de service sur le nuage.

8. Appareil selon la revendication 7, dans lequel l'unité de génération de file d'attente (630) est configurée pour trier l'enregistrement d'utilisation du paquet d'utilisation du premier compte et l'enregistrement d'utilisation du paquet d'utilisation du second compte sur la base du temps d'utilisation, pour obtenir une pluralité d'enregistrements d'utilisation ;
l'unité de génération de file d'attente (630) est configurée pour obtenir, sur la base d'un type de ressource de service sur le nuage de chaque enregistrement d'utilisation dans la pluralité d'enregistrements d'utilisation, une séquence de déduction correspondant à chaque enregistrement d'utilisation ; et
l'unité de génération de file d'attente (630) est configurée pour déterminer, selon la séquence de déduction correspondant à chaque enregistrement d'utilisation, un paquet d'utilisation à déduire correspondant à chaque enregistrement d'utilisation, pour obtenir la file d'attente à déduire, dans lequel chaque entrée de file d'attente dans la file d'attente à déduire comprend l'enregistrement d'utilisation et le paquet d'utilisation à déduire correspondant à l'enregistrement d'utilisation.

9. Appareil selon l'une quelconque des revendications 6 à 8, dans lequel la politique de partage du premier paquet d'utilisation comprend la déduction préalable du premier paquet d'utilisation, ou la déduction préalable d'un ou de plusieurs sous-paquets d'utilisation du premier paquet d'utilisation ; et la politique de partage du second paquet d'utilisation comprend la déduction préalable du second paquet d'utilisation, ou la déduction préalable d'un ou de plusieurs sous-paquets d'utilisation dans le second paquet d'utilisation.

10. Appareil selon l'une quelconque des revendications 6 à 9, dans lequel la politique de partage du premier paquet d'utilisation et la politique de partage du second paquet d'utilisation comprennent chacune une plage de temps, et la plage de temps est utilisée pour déduire le premier paquet d'utilisation ou le second paquet d'utilisation sur la base d'un enregistrement d'utilisation dans la plage de temps.

11. Produit de programme informatique, dans lequel, lorsque le produit de programme informatique est lu et exécuté par un dispositif informatique, le procédé selon l'une quelconque des revendications 1 à 5 est réalisé.

12. Support de stockage non-transitoire lisible par ordinateur, comprenant des instructions, dans lequel, lorsque les instructions sont exécutées sur un dispositif informatique, le dispositif informatique est activé pour réaliser le procédé selon l'une quelconque des revendications 1 à 5.
